# EUROPEAN PATENT APPLICATION

(11) **EP 3 543 125 A1**
(43) Date of publication of application: **25.09.2019**
(21) Application number: 18163757.0
(22) Date of filing: 23.03.2018
(51) Int. Cl.: B64D 11/06, B60N 2/005, B60N 2/01, B60N 2/34, B64D 11/00

(54) **PASSENGER SEATING ARRANGEMENT**

(71) Applicant: Adient Aerospace LLC, Kirkland, WA 98033 (US)
(72) Inventor: PUGH, Samuel David, 67657 Kaiserslautern (DE)
(74) Representative: Liedtke & Partner Patentanwälte

(57) **Abstract**

The invention relates to a passenger seating arrangement (1) for a vehicle cabin (2) comprising a plurality of seating units (3, 3', 4, 8, 9), wherein
- each seating unit (3, 3', 4, 8, 9) comprises one of
- an aisle console (3.1, 4.1, 9.1, 9.1') or a non-aisle console (3.1', 8.1) and
- an aisle seat (3.2', 4.2, 8.2) or a non-aisle seat (3.2, 9.2),
- each seat (3.2, 3.2', 4.2, 8.2, 9.2) being adjustable between at least a seating position (P1) and at least a bed position (P2),

- wherein at least the non-aisle consoles (3.1', 8.1) comprise dimensions (L1, L4) larger than dimensions (L2) of the aisle consoles (3.1, 9.1) at least with respect to the longitudinal direction of the cabin (2) and within the same column (C1 to C7).

## Description

### FIELD OF INVENTION

The invention relates to a passenger seating arrangement for a vehicle cabin, in particular for an aircraft cabin.

### DESCRIPTION OF THE RELATED ART

There are a wide variety of passenger seating arrangements for a vehicle cabin, in particular for an aircraft cabin known in the prior art.

For example, the European Patent Application 3 122 630 defines an aircraft seating system comprising first, second and third aircraft seating modules. A distance between the first aircraft seating module and the second aircraft seating module in a direction of flight is smaller than a distance between the second aircraft seating module and the third aircraft seating module in the direction of flight.

### SUMMARY OF THE INVENTION

The present invention seeks to improve a passenger seating arrangement for a vehicle cabin, in particular for an aircraft cabin or any other passenger carrying vehicle. In particular, a use of space within the vehicle cabin and between pluralities of seating units can be advantageously optimised.

The object is achieved by a passenger seating arrangement according to claim 1. Further, the object is achieved by a vehicle cabin comprising such a passenger seating arrangement according to claim 13.

Preferred embodiments of the invention are given in the dependent claims.

The disclosure provides a passenger seating arrangement for a vehicle cabin, in particular an aircraft cabin, comprising a plurality of seating units. The seating units in one column are arranged one behind another in a longitudinal direction of the vehicle cabin. Each seating unit comprises at least one console and at least one seat arranged adjacent to the console. In particular, the console is arranged at least partially and substantially alongside of the seat. The seat is adjustable between at least a seating position and at least a bed position. Moreover, the console and the seat of each seating unit are arranged in a staggered manner such that each seat of one seating unit is aligned with a console of another seating unit, wherein each seating unit comprises one of an aisle console or a non-aisle console and an aisle seat or a non-aisle seat depending on an orientation of the console and the seat with respect to the aisle. Furthermore, at least all the non-aisle consoles having dimensions larger at least with respect to the longitudinal direction of the vehicle cabin than dimensions of the aisle consoles within the same column.

For example, the column is arranged between a cabin wall and the aisle. The non-aisle consoles are arranged adjacent the cabin wall. Thereby, the aisle consoles are arranged on a side bordering the aisle. With regard to the non-aisle seats, the non-aisle seats are arranged adjacent the cabin wall and next to the aisle consoles. The aisle seats are arranged on the side bordering the aisle and next to the non-aisle consoles.

In particular, a space along the cabin wall can be used efficiently by enlarging the non-aisle consoles without reducing or inhibiting a passenger access to the seating unit. Particularly, each seating unit is still separately and directly accessible by the aisle. Especially, by means of an enlarged non-aisle console a high comfort seating unit can be offered to passengers. At the same time, the seating units are located at same distances to each other within the same column providing same passenger accesses. In particular, a distance between a front surface side of the seat of one seating unit and a rear surface side of another seating unit remains the same along each column.

Conventional seating units tend to create a gap between seating unit parts when they are arranged one behind another. Generally it is possible to place a suitcase within the gap but there would be a lack of safety in case of turbulences. Hence, it is not recommended to use this gap on one's own. The gap can be seen as an unused space.

To optimise use of space within the vehicle cabin whilst ensuring optical qualities, a forming of above mentioned gap can be avoided by modifying, particularly extending at least the non-aisle consoles. A basic shape and basic equipment can remain the same of each seating unit. That means that in particular basic dimensions of each seating unit must not be changed for the purpose of the present invention. For instance, an installation and arrangement of each seating unit within the vehicle cabin is substantially equally simple, wherein the non-aisle consoles are already modified.

According to the adjustable seat of the present invention, the seat is formed by at least a seat pan and a backrest. Additionally, the seat may comprise optionally a leg-rest. For instance, the seat can be brought into one or more positions, e.g. into a taxi, take-off, landing position, designated as "TTL" or "TT&L"-position, an inclined position or a sleeping position. Particularly, in the sleeping position the seat pan, the backrest and optionally the leg-rest are brought into a substantially flat, horizontal position.

According to an embodiment of the passenger seating arrangement, each of the seating units comprises a furniture structure having at least a partition wall to separate the seating units from each other. In particular, the partition wall is a wall arranged behind each seat of the seating units and separates them from each other in the longitudinal direction of the cabin. Furthermore, a side of the seating unit which is bordering the aisle can be part of the furniture structure. This side provides privacy to a passenger seated in a corresponding seating unit from other seating units positioned opposite the aisle. The console can also be part of the furniture structure. Furthermore, the furniture structure can comprise at least one movable or immovable armrest arranged next to the seat. Thereby, the movable armrest can provide a sleeping surface extension in a stowed position. In particular, an enclosed suite can be provided to each of the seating units by the furniture structure.

Depending on an interior space of the vehicle cabin, a number of seating units of each column can be varied. Further, a number of columns can be varied as desired by e.g. an airline itself. The term "interior space" is understood as comprising dimensions of the vehicle cabin, in particular a length and a width of at least a passenger carrying compartment of the vehicle. The length of the passenger carrying compartment affects a length of each column, in particular the number of seating units arranged behind each other within each column. The width of the passenger carrying compartment affects a number of columns arranged next to each other in a transverse direction of the vehicle cabin. For instance, the cabin can comprise one or more outer columns along each vehicle cabin wall and one or more center columns arranged between the outer columns. Thereby, the center columns can be separated from the outer columns and/or from each other by aisles.

According to an embodiment of the passenger seating arrangement, the non-aisle consoles having larger dimensions are arranged adjacent another column along a longitudinal axis of the vehicle cabin. For example, the vehicle cabin, hereafter also termed as cabin, comprises two center columns. The center columns are positioned within the cabin such that the center columns align along the longitudinal axis of the cabin. The seating units of each center column are arranged adjacent to each other along the longitudinal axis of the vehicle cabin. Thereby, the seating units of each column can be arranged offset to each other. Optionally, the seating units of each column are arranged side by side along the longitudinal axis of the cabin. Exemplary, the non-aisle seats of the seating units of one center column and the non-aisle consoles of the seating units of the other center column align with each other along the longitudinal axis. Further, the seating units can be arranged in a mirrored manner such that the non-aisle consoles of the seating units of one center column and the non-aisle consoles of the seating units of the other column align with each other along the longitudinal axis.

In another embodiment of the passenger seating arrangement, the aisle consoles which are arranged on a side of the seating unit bordering the aisle comprise larger dimensions when the column is arranged between two aisles. Thereby, each seating unit of each column is accessible by the aisle which is aligned with the aisle seats of each column.

According to a further embodiment of the passenger seating arrangement, each of the seating units is a forward facing seating unit, wherein at least a longitudinal axis of the seat is substantially parallel to the longitudinal axis of the vehicle cabin. It will be understood that the seat can be positioned within the seating unit relatively angled with respect to the longitudinal axis of the cabin.

Another possible embodiment of the passenger seating arrangement relates to seating units which are distanced from each other by a pitch providing a passenger access. In particular, the pitch between each of the seating units is the same along each of the columns. Optionally, depending on the dimensions of the cabin or request of the airline the pitch can vary individually.

Referring to another embodiment of the passenger seating arrangement, each of the consoles comprises at least a partially opened space towards the seating unit arranged behind. The opened space can be used as footwell space and storage space for a rear passenger seated behind. In particular, the opened space is accessible for the rear passenger. For instance, the adjustable seat can be brought into the sleeping position, in particular a bed position, such that the seat is at least partially projecting into the opened space, particularly footwell. Therefore, the console and the opened space can be seen as an extension space for the rear passenger. Especially, the consoles comprising larger dimensions provide a larger comfort space for each corresponding passenger.

Referring to a further possible embodiment of the passenger seating arrangement, the seat of each seating unit comprises an extendable leg-rest which protrudes into the opened space at least in the bed position of the seat. Also, the leg-rest can be extended in inclined or reclined positions of the seat. In particular, high comfort space provided by the enlarged consoles can be offered to tall passengers and enabling more comfort and leg-/foot-space to them during travel.

Further, the console can comprise a support surface portion which is fixed inside the opened space, particularly footwell space. When the seat is brought into the sleeping position, the seat pan and optionally the leg-rest can come into contact with the support surface portion of the opened space such that a sleeping surface is extended for the rear passenger. Exemplary, the support surface portion has a corresponding shape with a shape of the seat pan and optionally with the leg-rest. Therefore, the support surface portion and the seat form a substantially flat sleeping surface in the bed position of the seat.

Referring to another embodiment of the passenger seating arrangement, each of the consoles comprises storage means and a utility surface for the passenger of the corresponding seating unit. In particular, the utility surface is provided by an upper surface of the console. For example, the utility surface can comprise a shelf, a table, storage space and storage means. The storage means can provide storage space for a remote control, magazines, suitcases, shoes, headphones or other items belonging to the passenger or airline. Additionally, the utility surface can comprise service and operational elements, such as switches and HMI-panel to control operable features of the seating unit. Therefore, the consoles providing larger dimensions can comprise a larger utility surface and e.g. more storage means.

The disclosure further relates to a vehicle cabin comprising a passenger seating arrangement as described above and hereafter.

According to an exemplary embodiment of the vehicle cabin, at least two columns and at least one aisle between the columns are provided within. Each of the columns can provide a different number of seating units arranged behind each other. Further, each of the columns can provide a different number of seating units, wherein each seating unit comprises one of an aisle console or a non-aisle console and an aisle seat or a non-aisle seat depending on an orientation of the console and the seat with respect to the aisle.

In a further exemplary embodiment of the vehicle cabin, at least two outer columns and at least one center column are provided within. The center column is arranged between the two outer columns. The outer columns are arranged along the vehicle cabin wall and each of the outer columns is separated by an aisle from the center column. For instance, all the non-aisle consoles of the outer columns comprise larger dimensions at least with respect to the longitudinal direction of the cabin than the aisle consoles of the outer columns. Each aisle console of the center column can comprise larger dimensions than the aisle consoles of the outer columns. Optionally, the aisle consoles of the center column can comprise common dimensions as the aisle consoles of the outer columns.

Another optionally embodiment of the vehicle cabin refers to the center column comprising double-seat seating units and single-seat seating units which are arranged one behind another in an alternating manner. In particular, each double-seat seating unit comprises two seats and one center console arranged between the two seats, wherein each single-seat seating unit comprises one console and one seat arranged adjacent to the console. Further, the console and the seat of each seating unit are arranged in a staggered manner such that each seat of the single-seat seating unit is aligned with the center console of the double-seat seating unit in the longitudinal direction of the vehicle cabin. Moreover, the single-seat seating unit comprises at least an additional storage component arranged adjacent the seat. That means that the console is arranged on one side of the seat and the additional storage component is positioned on the other side of the seat, particularly of the single-seat seating unit. The additional storage component comprises at least a partially opened space towards one seat of the double-seat seating unit arranged behind.

For example, the additional storage component is a component used by a staff working in the vehicle, e.g. a staff of the airline. Further, the additional storage component can be an interior fitting of the vehicle cabin. Exemplarily, items belonging to the passenger or airline can be stowed within the additional storage component. The additional storage component is arranged adjacent the aisle such that the staff has an easy access to the storage compartment by the corresponding aisle. This additional storage component can provide easier and faster service. The opened space within the additional storage component can be used as footwell space and storage space for a rear passenger seated behind. To provide further privacy to the passenger of the single-seat seating unit, a privacy screen can be arranged on the side of the additional storage component. The privacy screen is therefore part of a furniture structure of the single-seat seating unit.

In another possible embodiment of the vehicle cabin, the single-seat seating unit can comprise two consoles, each arranged on a side of the seat. Therefore, the single-seat seating unit provides more storage and comfort space to the passenger of the single-seat seating unit.

In particular, the additional storage component comprises larger dimensions at least with respect to the longitudinal direction of the vehicle cabin than dimensions of the aisle consoles of the outer columns.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus, are not limitative of the present invention, and wherein:
- Figure 1: is a top view of an embodiment of a passenger seating arrangement for a vehicle cabin, in particular for an aircraft cabin,
- Figure 2: is a top view of another embodiment of the passenger seating arrangement,
- Figure 3: is a perspective view of an embodiment of a seating unit of the passenger seating arrangement, wherein the seating unit comprises an enlarged console,
- Figure 4: is a sectional view of a possible embodiment of the seating unit of the seating arrangement in a bed position,
- Figure 5: is a top view of a further embodiment of the passenger seating arrangement,
- Figure 6: is a perspective view of another possible embodiment of the passenger seating arrangement and
- Figure 7: is a perspective view of a further optionally embodiment of seating units of the passenger seating arrangement.

Corresponding parts are marked with the same reference symbols in all figures.

### DETAILED DESCRIPTION OF PREFERRED EMBODIMENTS

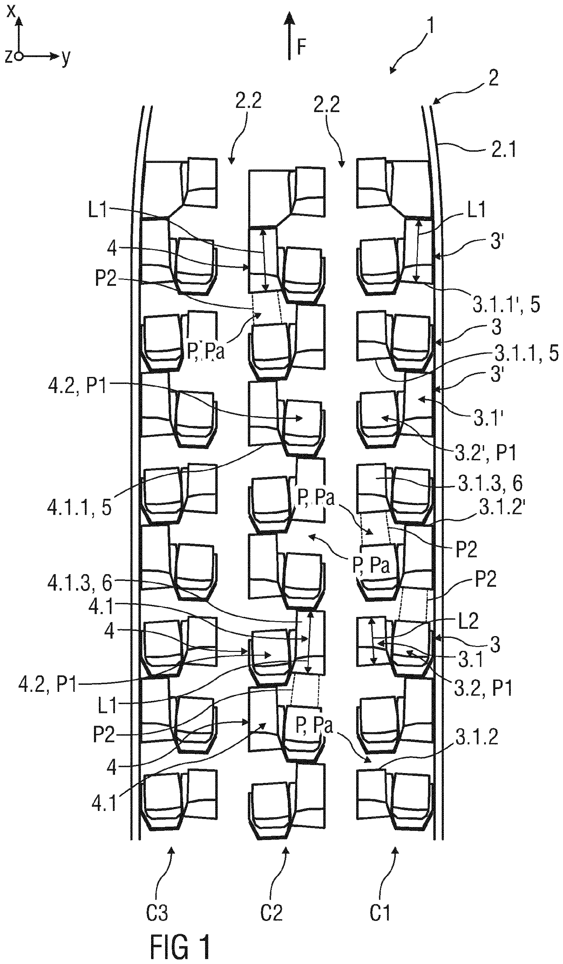

**Figure 1** shows a top view of an embodiment of a passenger seating arrangement 1 for a vehicle cabin 2. The vehicle cabin 2 is for example an aircraft cabin, a train cabin or any other passenger carrying vehicle cabin.

For a better understanding of subsequent descriptions of the passenger seating arrangement 1 a coordinate system is shown in further figures. The coordinate system comprises a longitudinal axis x, a transverse axis y and a vertical axis z in relation to the aircraft. In particular, the longitudinal axis x defines a longitudinal direction and length of the vehicle cabin 2, the transverse axis y defines a transverse direction and width of the vehicle cabin 2 and the vertical axis z defines a vertical direction and height of the vehicle cabin 2. Exemplarily, a flight direction F is shown in further figures.

The vehicle cabin 2 comprises three columns C1 to C3. Each column C1 to C3 comprises a plurality of seating units 3, 3', 4. The seating units 3, 3', 4 are arranged one behind another in the longitudinal direction of the vehicle cabin 2, hereafter termed as cabin 2.

Each of the columns C1 to C3 comprises forward facing seating units 3, 3', 4. In particular, the seating units 3, 3', 4 are facing in the flight direction F.

Depending on an interior space of the cabin 2, the number of seating units 3, 3', 4 of each column C1 to C3 can vary. Moreover, the number of columns C1 to C3 can vary. The term "interior space" is understood as comprising dimensions of the cabin 2, in particular the length and the width of the cabin 2. Particularly, the cabin 2 is a passenger carrying compartment of the not further detailed shown vehicle. The length affects a length of each column C1 to C3, in particular the number of seating units 3, 3', 4. The width affects the number of columns C1 to C3 arranged next to each other in the transverse direction of the cabin 2. For instance, the cabin 2 can comprise one or more outer columns C1, C3 along each vehicle cabin wall 2.1. Further, one or more center columns C2 can be arranged between the outer columns C1, C3. Thereby, the center column C2 is separated from the outer columns C1, C3 by aisles 2.2.

Particularly, each of the seating units 3, 3', 4 comprises a side bordering at least one of the aisles 2.2.

In the shown embodiment, the outer columns C1, C3 comprises a plurality of seating units 3, 3'. The center column C2 comprises a plurality of seating units 4, wherein the seating units 4 have two sides each bordering one of the aisles 2.2. It is to be understood that the seating units 3' of the outer columns C1, C3 and the seating units 4 of the center column C2 are of the same type, particularly providing same equipment and structure. For better understanding of the shown embodiment, two reference numbers even for the same type of seating units 3', 4 is used.

A pitch P is provided between each of the seating units 3, 3', 4. The pitch P defines a passenger access Pa. Each of the seating units 3, 3', 4 is separately accessible by the aisle 2.2. In particular, the seating units 3, 3' of the outer columns C1, C3 are positioned offset to the seating units 4 of the center column C2. This offset arrangement prevents directly opposite aligned pitches P such that a personal privacy of each passenger is ensured.

Further, each seating unit 3 of the outer columns C1, C3 comprises an aisle console 3.1 and a non-aisle seat 3.2. The seating units 3' of the outer columns C1, C3 comprises each a non-aisle console 3.1' and an aisle seat 3.2'. The seating units 3, 3' are arranged in a staggered manner along the longitudinal direction of the cabin 2. For example, a position of the aisle console 3.1 of a first seating unit 3 and a position of the non-aisle console 3.1' alternates behind each other in the longitudinal direction of the cabin 2. Each seating unit 4 of the center column C2 comprises an aisle console 4.1 and an aisle seat 4.2. Each non-aisle seat 3.2 and aisle seat 3.2', 4.2 is arranged adjacent to their corresponding aisle console 3.1, non-aisle console 3.1' and aisle console 4.1. Exemplarily, each of the aisle seats 3.2', 4.2 and non-aisle seats 3.2 can be positioned within their corresponding seating unit 3, 3', 4 such that a longitudinal axis of each aisle seat 3.2', 4.2 and non-aisle seat 3.2 is substantially parallel to the longitudinal axis x of the cabin 2. Optionally, the longitudinal axis of each aisle seat 3.2', 4.2 and non-aisle seat 3.2 is slightly angled relative to the longitudinal axis x of the cabin 2.

Furthermore, the non-aisle consoles 3.1' are arranged adjacent the cabin wall 2.1. Thereby, the aisle consoles 3.1 are arranged bordering the aisle 2.2. With regard to the non-aisle seats 3.2, the non-aisle seats 3.2 are arranged adjacent the cabin wall 2.1 and next to the aisle consoles 3.1. The aisle seats 3.2' are arranged bordering the aisle 2.2 and next to the non-aisle consoles 3.1'.

Moreover, all non-aisle consoles 3.1' having larger dimensions L1 at least with respect to the longitudinal direction of the cabin 2 than dimensions L2 of the aisle consoles 3.1 within the same column C1, C3. Additionally, the aisle consoles 4.1 of the center column C2 comprise dimensions L1 larger than dimensions L2 of the aisle consoles 3.1 of the outer columns C1, C3. In particular, a length of the non-aisle consoles 3.1' and the aisle consoles 4.1 is longer than a length of the aisle consoles 3.1 of the outer columns C1, C3. Especially, by means of enlarged non-aisle consoles 3.1' and aisle consoles 4.1 high comfort seating units 3', 4 can be offered to passengers.

Each of the aisle seats 3.2' and non-aisle seats 3.2, 4.2 is adjustable between at least a seating position P1 and at least a bed position P2. In the bed position P2 the aisle seats 3.2' and non-aisle seats 3.2, 4.2 can be brought into a substantially flat, horizontal sleeping position.

Further, the aisle consoles 3.1, 4.1 and the non-aisle consoles 3.1' of the seating units 3, 3', 4 each comprising an opened space 5 for a passenger seated behind. In particular, the opened space 5 defines a footwell space at a rear side of each aisle consoles 3.1, 4.1 and the non-aisle consoles 3.1' facing towards the passenger seated behind. The opened space 5 is therefore accessible for a rear passenger. Exemplary, the opened space 5 is formed by a rear surface 3.1.1, 3.1.1', 4.1.1 of each of the aisle consoles 3.1, 4.1 and non-aisle consoles 3.1'.

For instance, the adjustable aisle seats 3.2' and non-aisle seats 3.2, 4.2 can be brought into the bed position P2, such that the aisle seats 3.2' and non-aisle seats 3.2, 4.2 are at least partially projecting into their corresponding opened space 5. Therefore, the non-aisle consoles 3.1' and the aisle consoles 4.1 with the larger dimensions L1 provide a larger footwell space to the passenger of the corresponding seating unit 3', 4 than the aisle consoles 3.1.

Additionally, the opened space 5 can be used to store a suitcase, shoes, a blanket or the like for the rear passenger. Optionally or further additionally, a front surface 3.1.2, 3.1.2', 4.1.2 of each of the non-aisle consoles 3.1' and aisle consoles 3.1, 4.1 can be accessed by the passenger of the corresponding seating unit 3, 3', 4 to store items or the like.

Furthermore, each of the aisle consoles 3.1, 4.1 and the non-aisle consoles 3.1' comprises a utility surface 6 for the passenger of the corresponding seating unit 3, 3', 4. For example, the utility surface 6 can comprise a shelf or a table-top. In particular, the utility surface 6 is formed by an upper surface 3.1.3, 3.1.3', 4.1.3 of each of the non-aisle consoles 3.1' and aisle consoles 3.1, 4.1. The non-aisle consoles 3.1' and aisle consoles 4.1 with the larger dimensions L1 provide a larger utility surface 6 than the aisle consoles 3.1 of the outer columns C1, C3.

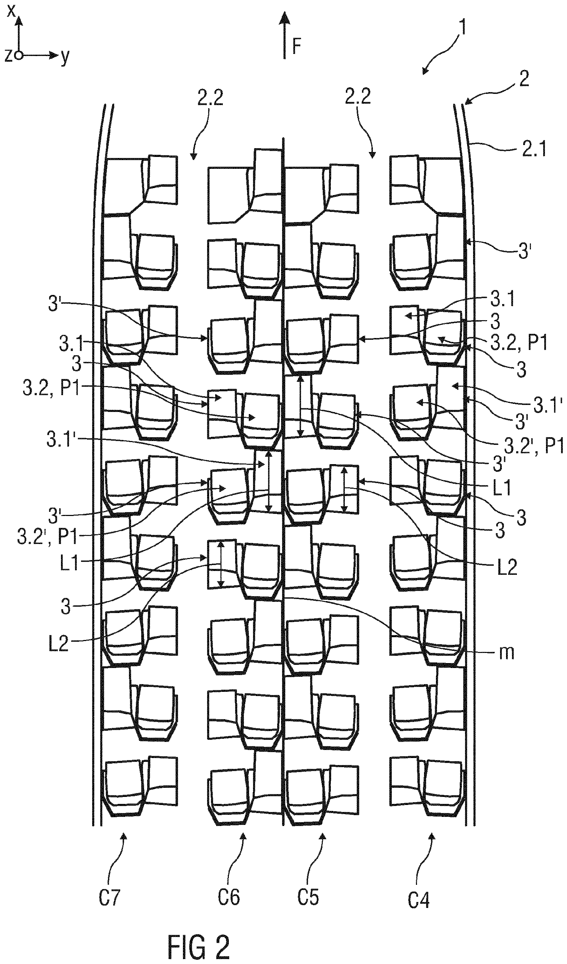

**Figure 2** shows a top view of a further embodiment of the passenger seating arrangement 1.

The cabin 2 comprises four columns C4 to C7. In particular, the cabin 2 comprises two outer columns C4, C7 and two center columns C5, C6.

The center columns C5, C6 are aligned with each other in the longitudinal direction of the cabin 2. In the shown embodiment, the center columns C5, C6 are aligned along a center axis m of the cabin 2.

In a not shown embodiment, the center column C5 can be separated from the center column C6 by an additional aisle 2.2.

In the shown embodiment, each of the columns C4 to C7 comprises a plurality of seating units 3, 3'. Particularly, all the seating units 3 comprise the non-aisle seat 3.2 arranged next to the aisle console 3.1 in the transverse direction of the cabin 2. All the seating units 3' comprise the aisle seat 3.2' arranged next to the non-aisle console 3.1' in the transverse direction of the cabin 2. In each column C4 to C7, the seating unit 3.1 and the seating unit 3' are arranged in an alternating manner. Each of the non-aisle consoles 3.1' comprises larger dimensions L1 than the dimensions L2 of the aisle consoles 3.1. In particular, the non-aisle consoles 3.1' of the center columns C5, C6 are arranged aligned with the center axis m of the cabin 2. Further, each of the seating units 3 having the aisle console 3.1 of one of the center columns C5, C6 is arranged adjacent to the seating unit 3' having the non-aisle console 3.1' of one of the other center columns C5, C6 in the transverse direction of the cabin 2.

In a not shown embodiment, the seating units 3, 3' of the center columns C5, C6 can be arranged in a mirrored manner along the center axis m of the cabin 2. Therefore, the non-aisle consoles 3.1' of the center column C5 are arranged adjacent to the non-aisle consoles 3.1' of the other center column C6 in the transverse direction of the cabin 2.

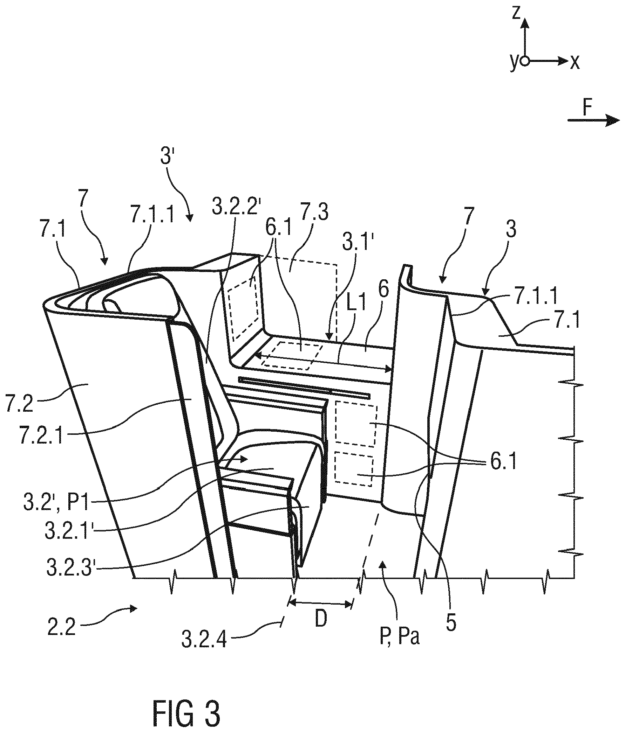

**Figure 3** shows a perspective view of an embodiment of the seating unit 3' having an enlarged non-aisle console 3.1'. The seating unit 3' is arranged behind another partially shown seating unit 3. It is to be understood that the described non-aisle console 3.1' can also be provided to the seating unit 4 as enlarged aisle console 4.1. Particularly, the enlarged non-aisle console 3.1' comprises larger dimensions L1 than the aisle console 3.1 shown in **figures 1** **and** **2****.**

According to the adjustable aisle seat 3.2' the aisle seat 3.2' is formed by a seat pan 3.2.1', a backrest 3.2.2' and a leg-rest 3.2.3'. Additionally, the aisle seat 3.2' can comprise a head-rest. It will be understood that each of the above and hereafter mentioned seating units 3, 3', 4, 8, 9 can comprise such seat parts.

For instance, the aisle seat 3.2' can be brought into one or more positions, e.g. into a taxi, take-off, landing position, designated as "TTL" or "TT&L"-position or the seating position P1, an inclined position or the bed position P2. Particularly, in the bed position P2 the seat pan 3.2.1', the backrest 3.2.2' and the leg-rest 3.2.3' are brought into a substantially flat, horizontal position.

For instance, the adjustable non-aisle seat 3.2' can be brought into the bed position P2, such that the non-aisle seat 3.2' is partially projecting into the opened space 5 of the front seating unit 3.

Each of the seating units 3, 3' comprises a furniture structure 7 having at least a partition wall 7.1. In particular, the partition wall 7.1 is a wall arranged behind the aisle seat 3.2' and the non-aisle console 3.1', so as behind the non-aisle seat 3.2 and the aisle console 3.1, and separates them in the longitudinal direction of the cabin 2. On a rear surface 7.1.1 of the partition wall 7.1, which faces towards a rear passenger seated behind, a monitor or screen can be attached. The monitor or screen can at least provide information or entertainment to the rear passenger.

Furthermore, the furniture structure 7.1 comprises a privacy wall 7.2 on the aisle 2.2 bordering side of the seating unit 3, 3'. In the shown embodiment, the privacy wall 7.2 is connected to the partition wall 7.1. The privacy wall 7.2 can comprise a movable privacy door 7.2.1 for at least partially closing the pitch P and the passenger access Pa. In particular, the pitch P is measured or rather provided by at least a distance D between the rear surface 7.1.1 of a front partition wall 7.1 and a front surface 3.2.4' of a rear aisle seat 3.2' in the seating position P1. The distance D particularly remains the same between each of the above and hereafter mentioned seating units 3, 3', 4, 8, 9.

Additionally, the furniture structure 7.1 can comprise a movable or fixed privacy screen 7.3, shown as dotted line. The privacy screen 7.3 is arranged on an opposite side of the privacy wall 7.2.

Furthermore, the non-aisle console 3.1' comprises the utility surface 6 for the passenger of the corresponding seating unit 3'. The utility surface 6 comprises a number of storage means 6.1. For example, the storage means 6.1 can be used to store a remote control, magazines, a life vest and headphones or other items belonging to the passenger or airline. Additionally, the utility surface 6 can comprise service and/or operational elements, such as switches and HMI-panel to control operable features of the seating unit 3'.

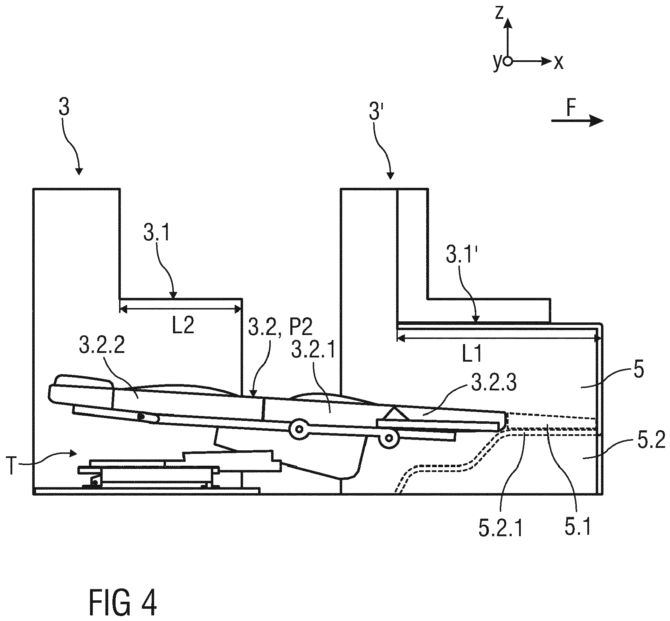

**Figure 4** shows a sectional view of a further embodiment of the seating unit 3 arranged behind another seating unit 3' having an enlarged non-aisle console 3.1'.

In the shown embodiment, the non-aisle console 3.1' having larger dimensions L1 than the dimensions L2 of the aisle console 3.1 comprises a support surface portion 5.1 which is fixed inside the opened space 5. When the aisle seat 3.2 of the rear passenger is brought into the bed position P2, the aisle seat 3.2 can come into contact with the support surface portion 5.1. Thereby, a track mechanism T and a not further shown adjusting or inclination device can be provided to the non-aisle seat 3.2'.

Particularly, a sleeping surface is extended for the rear passenger. Thereby, a seat pan 3.2.1, a backrest 3.2.2 and a leg-rest 3.2.3 are brought into a substantially flat, horizontal bed position P2. Further, the support surface portion 5.1 within the opened space 5 can provide a shape corresponding with a leg-rest 3.2.3 of the aisle seat 3.2 in the bed position P2. Therefore, the support surface portion 5.1 can comprise a padded surface.

In another embodiment, the support surface portion 5.1 is part of the seat 3.2 such as an extendable foot-rest coupled to the leg-rest 3.2.3.

Further, a storage compartment 5.2 can be arranged within the opened space 5. In particular, the storage compartment 5.2 is positioned below the support surface portion 5.1. The storage compartment 5.2 can be accessed by the passenger of the corresponding seating unit 3' in front.

Moreover, the support surface portion 5.1, particularly the padded surface, can be fixed on a top surface 5.2.1 of the storage compartment 5.2.

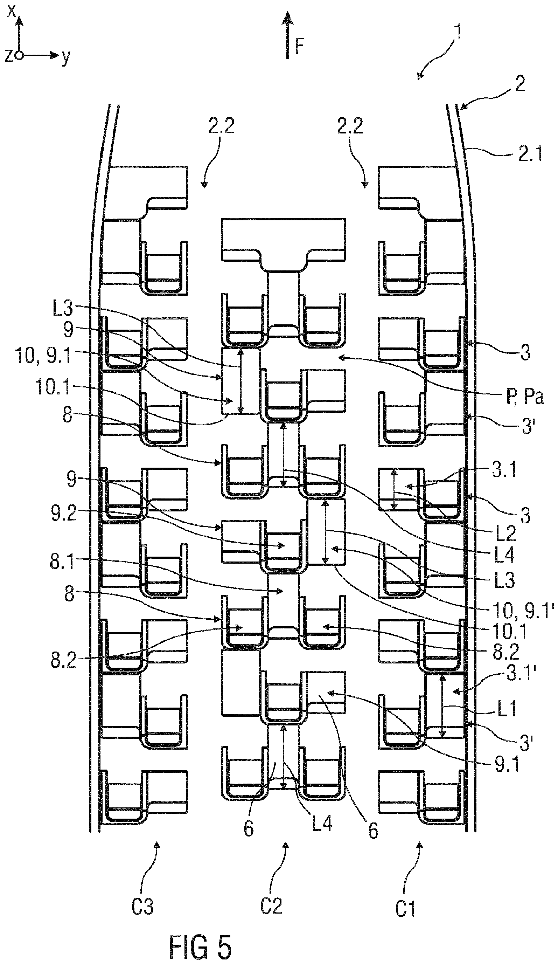

**Figure 5** shows a top view of a further embodiment of the passenger seating arrangement 1.

In the shown embodiment, the cabin 2 comprises three columns C1 to C3. Particularly, the cabin 2 comprises two outer columns C1, C3 and one center column C2.

The outer columns C1, C3 comprises seating units 3, 3', wherein the non-aisle consoles 3.1' of the outer columns C1, C3 comprises the larger dimensions L1 than the dimensions L2 of the aisle consoles 3.1 in the same column C1, C3.

The center column C2 comprises double-seat seating units 8 and single-seat seating units 9 which are arranged one behind another in an alternating manner.

In particular, each double-seat seating unit 8 comprises one non-aisle console 8.1 and two aisle seats 8.2, wherein the non-aisle console 8.1 is arranged between the two aisle seats 8.2. The non-aisle console 8.1 comprises one utility surface 6 to each passenger seated on one of the seats 8.2. Additionally, the non-aisle console 8.1 can comprise a not further shown movable of immovable separation screen to separate a passenger space when seated on one of the seats 8.2.

Each single-seat seating unit 9 comprises one aisle console 9.1 and one non-aisle seat 9.2 arranged adjacent to the aisle console 9.1. The aisle console 9.1 comprises the utility surface 6 for the passenger of the corresponding single-seat seating unit 9.

Further, the consoles 8.1, 9.1 and the seat 8.2, 9.2 of each seating unit 8, 9 are arranged in a staggered manner such that each seat 9.2 of the single-seat seating unit 9 is aligned with the console 8.1 of the double-seat seating unit 8 in the longitudinal direction of the cabin 2. Moreover, the single-seat seating unit 9 comprises at least an additional storage component 10 arranged adjacent the seat 9.2. Optionally, the additional storage component 10 is just arranged next to the single-seat seating unit 9 in the transverse direction of the cabin 2.

In particular, the console 9.1 is arranged on one side of the seat 9.2 and the additional storage component 10 is positioned on the other side of the seat 9.2. The additional storage component 10 comprises an opened space 10.1 towards one seat 8.2 of the double-seat seating unit 8 arranged behind.

Exemplarily, the double-seat seating units 8 and the single-seat seating units 9 comprise substantially same furniture structure 7 and equipment as the seating units 3, 3', 4 described in the figures above.

For example, the additional storage component 10 is a component used by a staff working in the vehicle, e.g. a staff of the airline. Exemplarily, the additional storage component 10 can be one of a cupboard unit, locker unit and wardrobe unit, e.g. for the passenger. Further, the additional storage component 10 can be an interior fitting of the cabin 2. Exemplary, items belonging to the passenger or airline can be stowed within the additional storage component 10. The additional storage component 10 is arranged adjacent the aisle 2.2 such that the staff has an easy access to the additional storage component 10 by the corresponding aisle 2.2. This position of the additional storage component 10 can provide easier and faster service of the staff and so as to the passengers. The opened space 10.1 of the additional storage component 10 can be used as footwell space and storage space for a rear passenger seated behind. To provide further privacy to the passenger of the single-seat seating unit 9, the single-seat seating unit 9 can comprise a privacy screen 9.3 arranged on the side of the additional storage component 10.

With regard to the additional storage component 10, the additional storage component 10 comprises larger dimensions L3 at least in the longitudinal direction of the cabin 2 than the dimensions L2 of the aisle consoles 3.1 of the outer columns C1, C3. Particularly, the dimensions L3 of the additional storage component 10 is substantially equal to the dimensions L1 of the non-aisle consoles 3.1' of the outer columns C1, C3. Therefore, seats 8.2 arranged behind the additional storage components 10 have a high comfort and footwell space for the corresponding passenger.

Furthermore, the console 8.1 of each double-seat seating unit 8 can comprise same dimensions L4 as the additional storage component 10 and the non-aisle consoles 3.1'. Particularly, the dimensions L4 of the consoles 8.1 substantially equal the dimensions L1 of the non-aisle consoles 3.1' and the dimensions L3 of the additional storage component 10. Therefore, an installation of the passenger seating arrangement 1 within the cabin 2 can be substantially simplified.

In another possible embodiment, the additional storage component 10 is part of the single-seat seating unit 9. In particular, the additional storage component 10 can be a second aisle console 9.1' of the single-seat seating unit 9. Therefore, the single-seat seating unit 9 provides more storage and comfort space to the passenger of the single-seat seating unit 9.

Moreover, each of the seats 8.2, 9.2 is accessible by the corresponding aisle 2.2. In particular, each of the two seats 8.2 of the double-seat seating units 8 is arranged adjacent to the aisle 2.2. Each of the seats 9.2 of the single-seat seating unit 9 is distanced by the console 9.2 and the additional storage component 10 from each of the aisles 2.2. The passenger access Pa is formed on the side of the console 9.2 for the single-seat seating unit 9.

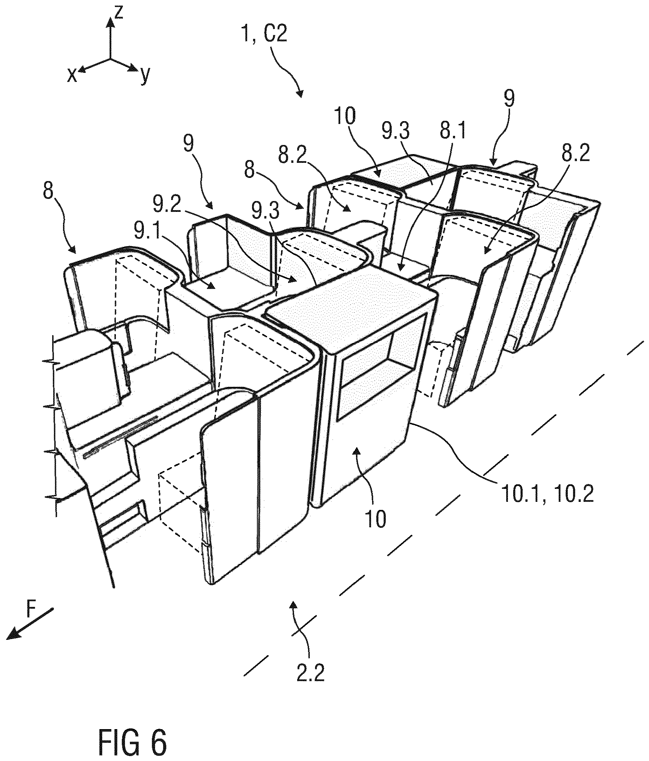

**Figure 6** shows a perspective view of a further embodiment of the passenger seating arrangement 1, in particular an excerpt of the center column C2 of **figure 5****.**

The shown center column C2 comprises a number of double-seat seating units 8 and single-seat seating units 9 as described in **figure 5****.**

Each of the single-seat seating units 9 comprises the additional storage component 10 on one side of the seat 9.2. In the shown embodiment, the additional storage component 10 is larger in the vertical direction and longitudinal direction of the cabin 2 than each of the consoles 8.1, 9.1. For example, the additional storage component 10 provides unique storage opportunities for the airline or the passenger. Exemplary, the additional storage component 10 can serve as groceries, supplies or accessories compartment. Furthermore, the opened space 10.1 is integrated on a rear surface 10.2 of the additional storage component 10 providing a footwell space and/or storage space to the rear passenger.

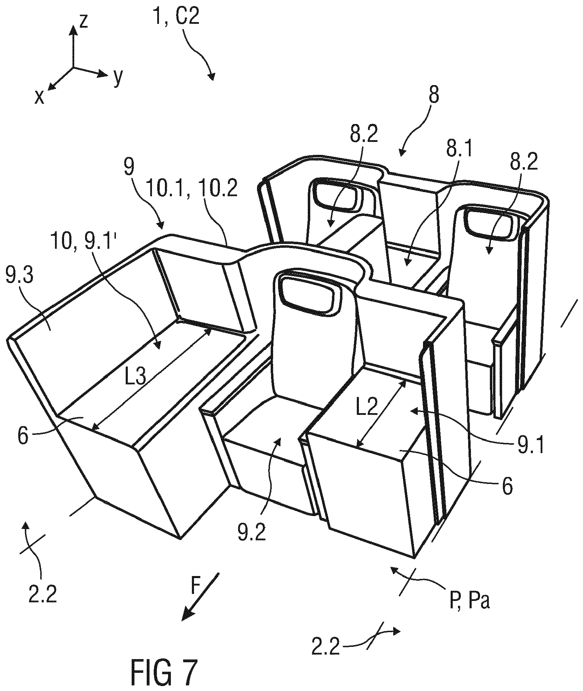

**Figure 7** shows a perspective view of another embodiment of the passenger seating arrangement 1, in particular an excerpt of the center column C2 of **figure 5****.**

In the shown embodiment, the double-seat seating unit 8 is arranged behind the single-seat seating unit 9 in the longitudinal direction of the cabin 2.

In particular, the additional storage component 10 is part of the single-seat seating unit 9. Exemplary, the additional storage component 10 is shaped as the second console 9.1' of the single-seat seating unit 9. Thereby, the privacy screen 9.3 of the single-seat seating unit 9 is provided on a side of the second console 9.1' bordering the aisle 2.2 to provide privacy to the corresponding passenger.

The second console 9.1' comprises a larger utility surface 6 for the passenger of the single-seat seating unit 9. Further, such an enlarged second console 9.1' comprises a larger footwell space and/or storage space for the rear passenger. Particularly, the passenger access Pa is provided on the side of the console 9.1 with smaller dimensions L2 than the dimensions L3 of the second console 9.1' of the single-seat seating unit 9.

Moreover, a high comfort space, seating space and storage space are provided to the passenger of the single-seat seating unit 9 due to double-side consoles 9.1, 9.1'.

### List of References

- 1: passenger seating arrangement
- 2: vehicle cabin
- 2.1: cabin wall
- 2.2: aisle
- 3: seating unit
- 3.1: console
- 3.1.1: rear surface
- 3.1.2: front surface
- 3.1.3: upper surface
- 3.2: seat
- 3.2.1: seat pan
- 3.2.2: backrest
- 3.2.3: leg-rest
- 3': seating unit
- 3.1': non-aisle console
- 3.1.1': rear surface
- 3.1.2': front surface
- 3.1.3': upper surface
- 3.2': seat
- 3.2.1': seat pan
- 3.2.2': backrest
- 3.2.3': leg-rest
- 3.2.4': front surface
- 4: seating unit
- 4.1: console
- 4.1.1: rear surface
- 4.1.2: front surface
- 4.1.3: upper surface
- 4.2: seat
- 5: opened space
- 5.1: support surface portion
- 5.2: storage compartment
- 5.2.1: top surface
- 6: utility surface
- 6.1: storage means
- 7: furniture structure
- 7.1: partition wall
- 7.1.1: rear surface
- 7.2: privacy wall
- 7.2.1: privacy door
- 7.3: privacy screen
- 8: double-seat seating unit
- 8.1: console
- 8.2: seat
- 9: single-seat seating unit
- 9.1, 9.1': console
- 9.2: seat
- 9.3: privacy screen
- 10: additional storage component
- 10.1: opened space
- 10.2: rear surface
- C1 to C7: column
- D: distance
- F: flight direction
- L1 to L4: dimension
- P: pitch
- Pa: passenger access
- P1, P2: position
- T: track mechanism
- m: center axis
- x: longitudinal axis
- y: transverse axis
- z: vertical axis

## Claims

1. Passenger seating arrangement (1) for a vehicle cabin (2) comprising a plurality of seating units (3, 3', 4, 8, 9), wherein
- the seating units (3, 3', 4, 8, 9) in one column (C1 to C7) are arranged one behind another in a longitudinal direction of the vehicle cabin (2),
- depending on an alignment of each seating unit (3, 3', 4, 8, 9) with respect to at least an aisle (2.2) of the cabin (2), each seating unit (3, 3', 4, 8, 9) comprises one of
- an aisle console (3.1, 4.1, 9.1, 9.1') or a non-aisle console (3.1', 8.1) and
- an aisle seat (3.2', 4.2, 8.2) or a non-aisle seat (3.2, 9.2),
- each seat (3.2, 3.2', 4.2, 8.2, 9.2) being adjustable between at least a seating position (P1) and at least a bed position (P2),
- wherein at least the non-aisle consoles (3.1', 8.1) comprise dimensions (L1, L4) larger than dimensions (L2) of the aisle consoles (3.1, 9.1) at least with respect to the longitudinal direction of the cabin (2) and within the same column (C1 to C7).

2. Passenger seating arrangement (1) according to claim 1, wherein the non-aisle consoles (3.1') having larger dimensions (L1) are arranged adjacent a vehicle cabin wall (2.1).

3. Passenger seating arrangement (1) according to claim 1 or 2, wherein the column (C2) comprising the non-aisle consoles (3.1') having larger dimensions (L1) is arranged aligned with another column (C3) along a longitudinal axis (x) of the vehicle cabin (2).

4. Passenger seating arrangement (1) according to one of the preceding claims, wherein the column (C2) comprises the aisle consoles (4.1, 9.1') having larger dimensions (L1, L3) when the column (C2) is arranged between two aisles (2.2).

5. Passenger seating arrangement (1) according to one of the preceding claims, wherein each of the seating units (3, 3', 4, 8, 9) is a forward facing seating unit (3, 3', 4, 8, 9), wherein at least a longitudinal axis of the corresponding seat (3.2, 3.2', 4.2, 8.2, 9.2) is substantially parallel to the longitudinal axis (x) of the vehicle cabin (2).

6. Passenger seating arrangement (1) according to one of the preceding claims, wherein the seating units (3, 3', 4, 8, 9) are distanced from each other by a pitch (P) providing a passenger access (Pa).

7. Passenger seating arrangement (1) according to one of the preceding claims, wherein each seating unit (3, 3', 4, 8, 9) is separately accessible by one aisle (2.2).

8. Passenger seating arrangement (1) according to one of the preceding claims, wherein each of the consoles (3.1, 3.1', 4.1, 8.1, 9.1, 9.1') comprises at least a partially opened space (5, 10.1) towards the seating unit (3, 3', 4, 8, 9) arranged behind.

9. Passenger seating arrangement (1) according to one of the preceding claims, wherein the seat (3.2, 3.2', 4.2, 8.2, 9.2) arranged behind each of the seating units (3, 3', 4, 8, 9) is at least partially protruding into the opened space (5, 10.1) at least in the bed position (P2).

10. Passenger seating arrangement (1) according to one of the preceding claims, wherein the seat (3.2, 3.2') of each seating unit (3, 3') comprises an extendable leg-rest (3.2.3, 3.2.3') which protrudes into the opened space (5) at least in the bed position (P2) of the seat (3.2, 3.2').

11. Passenger seating arrangement (1) according to one of the preceding claims, wherein each of the consoles (3.1, 3.1', 4.1, 8.1, 9.1) comprises a support surface portion (5.1) fixed within the opened space (5).

12. Passenger seating arrangement (1) according to one of the preceding claims, wherein each of the consoles (3.1, 3.1', 4.1, 8.1, 9.1, 9.1') comprises a utility surface (6) for a passenger of a corresponding seating unit (3, 3', 4, 8, 9).

13. Vehicle cabin (2) comprising a passenger seating arrangement (1) according to any one of the claims 1 to 12, wherein at least two outer columns (C1, C3, C4, C7) and at least one center column (C2, C5, C6) are provided within, in particular
- each of the outer columns (C1, C3, C4, C7) comprises non-aisle consoles (3.1') having dimensions (L1) larger than dimensions (L2) of the aisle consoles (3.1) at least with respect to the longitudinal direction of the vehicle cabin (2) and within the same column (C1, C3, C4, C7), and
- the center column (C2, C5, C6) comprises a number of aisle consoles (4.1, 9.1') having dimensions larger (L1, L3) than dimensions (L2) of the aisle consoles (3.1) of the outer columns (C1, C3, C4, C7).

14. Vehicle cabin (2) according to claim 13, wherein the center column (C2) comprises double-seat seating units (8) and single-seat seating units (9) which are arranged one behind another in an alternating manner,
- each double-seat seating unit (8) comprises two seats (8.2) and one console (8.1) arranged between the two seats (8.2),
- each single-seat seating unit (9) comprises one console (9.1) and one seat (9.2) arranged adjacent to the console (9.1),
- the console (8.1, 9.1) and the seat (8.2, 9.2) of each seating unit (8, 9) are arranged in a staggered manner, wherein
- the single-seat seating unit (9) comprises at least an additional storage component (10) arranged adjacent the seat (9.2), and
- the additional storage component (10) comprises at least a partially opened space (10.1) towards one seat (8.2) of the double-seat seating unit (8) arranged behind.

15. Vehicle cabin (2) according to claim 14, wherein the additional storage component (10) comprises dimensions larger (L3) than dimensions (L2) of the aisle consoles (3.1) at least with respect to the longitudinal direction of the vehicle cabin (2) of the outer columns (C1, C3).
